# EUROPEAN PATENT APPLICATION

(11) **EP 4 194 088 A1**
(43) Date of publication of application: **14.06.2023**
(21) Application number: 21852585.5
(22) Date of filing: 05.08.2021
(51) Int. Cl.: B01J 23/656, C01C 1/04

(54) **AMMONIA SYNTHESIS COMPOSITE CATALYST, AND METHOD FOR MANUFACTURING AMMONIA**

(30) Priority: 05.08.2020 JP 2020133051
(71) Applicant: Kyoto University, Kyoto-shi, Kyoto 606-8501 (JP)
(72) Inventor: OGAWA Takaya, Kyoto-shi, Kyoto 606-8501 (JP); ISHIHARA Keiichi, Kyoto-shi, Kyoto 606-8501 (JP); TORII Kazuma, Kyoto-shi, Kyoto 606-8501 (JP); OKUMURA Hideyuki, Kyoto-shi, Kyoto 606-8501 (JP)
(74) Representative: Cabinet Beau de Loménie
(86) International application number: PCT/JP2021/029211
(87) International publication number: WO 2022/030603

(57) **Abstract**

A provided ammonia synthesis catalyst is a composite catalyst including: a catalyst exhibiting catalytic activity for synthesis of ammonia; and a support supporting the catalyst. The support includes a hydrogen storage material. The hydrogen storage material is, for example, a hydrogen storage metal. The hydrogen storage metal is, for example, a hydrogen storage alloy. The hydrogen storage alloy is, for example, a solid solution. The hydrogen storage alloy is, for example, a Ti-Mn-based alloy. The catalyst includes, for example, a transition metal. The transition metal is, for example, at least one selected from the group consisting of Ru, Co, Ni, Fe, Mn, V, and Ti.

## Description

### TECHNICAL FIELD

The present invention relates to an ammonia synthesis composite catalyst and an ammonia manufacturing method.

### BACKGROUND ART

Ammonia (NH₃) is essential as a nitrogen source for various products such as artificial fertilizers, and has also been attracting attention as a hydrogen carrier. Nitrogen (N₂), which is a raw material of ammonia, is a very stable substance having a strong triple bond. Therefore, the Haber-Bosch process in which high-temperature and high-pressure conditions are necessary has still been in use as a mass production technique for synthesis of ammonia for over 100 years since the invention of the manufacturing process. As an enormous amount of energy is necessary to maintain the high-temperature and high-pressure conditions, various ammonia synthesis catalysts are under development to ease the conditions. Patent Literature 1 discloses an ammonia synthesis composite catalyst in which ruthenium is supported on a support including ceria and magnesia.

### CITATION LIST

### Patent Literature

Patent Literature 1: JP 2006-231229 A

### SUMMARY OF INVENTION

### Technical Problem

The present invention aims to provide a new ammonia synthesis catalyst.

### Solution to Problem

The present invention provides an ammonia synthesis composite catalyst including:
a catalyst exhibiting catalytic activity for synthesis of ammonia; and
a support supporting the catalyst, wherein
the support includes a hydrogen storage material.

In another aspect, the present invention provides an ammonia manufacturing method including: bringing a gas including hydrogen and nitrogen into contact with an ammonia synthesis catalyst to synthesize ammonia, wherein
the ammonia synthesis catalyst is the above ammonia synthesis composite catalyst of the present invention.

### Advantageous Effects of Invention

The present invention provides a new ammonia synthesis catalyst.

### BRIEF DESCRIPTION OF DRAWINGS

FIG. 1 is a graph showing a hydrogen storage capacity of a composite catalyst produced in an example.
FIG. 2 is a graph showing an Arrhenius plot of an ammonia synthesis reaction by means of a composite catalyst produced in an example.
FIG. 3 is a graph showing a hydrogen storage capacity of a composite catalyst produced in an example.
FIG. 4 is a graph showing an Arrhenius plot of an ammonia synthesis reaction by means of a composite catalyst produced in an example.
FIG. 5 is a graph showing a hydrogen storage capacity of a composite catalyst produced in an example.
FIG. 6 is a graph showing an Arrhenius plot of an ammonia synthesis reaction by means of a composite catalyst produced in an example.

### DESCRIPTION OF EMBODIMENTS

Hereinafter, embodiments of the present invention will be described. The present invention is not limited by the following embodiments.

### [Ammonia synthesis composite catalyst]

In choosing a support of a catalyst, activation energy reduction attributable to electron-donating properties or electron-withdrawing properties exhibited on the catalyst is emphasized in some cases. For example, inclusion of an electron-donating support in an ammonia synthesis catalyst is expected to reduce the activation energy of an ammonia synthesis reaction. The present inventors conceived a different idea of reducing the activation energy by means of a hydrogen storage capacity of a support, and have completed the present invention.

That is, an ammonia synthesis composite catalyst of the present embodiment includes:
a catalyst exhibiting catalytic activity for synthesis of ammonia; and
a support supporting the catalyst, wherein
the support includes a hydrogen storage material.

It is inferred that the hydrogen storage material prevents excess and shortage of hydrogen in the vicinity of the catalyst and decreases the activation energy of a synthesis reaction.

### (Support)

The support includes a hydrogen storage material. The hydrogen storage material may be a main component of the support. In the present specification, the term "main component" means a component whose content is highest. The content of the hydrogen storage material in the support is, for example, 50 mass% or more, and may be 60 mass% or more, 70 mass% or more, 80 mass% or more, 90 mass% or more, 95 mass% or more, 98 mass% or more, or even 99 mass% or more. The support may be formed of the hydrogen storage material. Examples of the hydrogen storage material include a hydrogen storage metal, an oxide of a hydrogen storage metal, and a metal-organic framework (MOF) of a hydrogen storage metal. Examples of the oxide of the hydrogen storage metal include zeolite. In another aspect, the hydrogen storage material may be a porous material such as MOF or zeolite. However, the hydrogen storage material is not limited to the above examples as long as the hydrogen storage material is a material that can store and release a gaseous hydrogen. A preferred example of the hydrogen storage material can store hydrogen at a higher density than the density of a gaseous hydrogen and can release the stored hydrogen. The hydrogen storage material may be a material that can store hydrogen at 1/3 or more or 1/2 or more the density (e.g., a density of 70.8 kg/m³ at 20 kelvin) of liquid hydrogen and that can release the stored hydrogen, or may be a material that can store hydrogen at a higher density than the density of liquid hydrogen or twice the density of liquid hydrogen and that can release the stored hydrogen.

The hydrogen storage material may be a hydrogen storage metal. The hydrogen storage metal is particularly suitable for reducing the activation energy of a synthesis reaction. In the present specification, the term "hydrogen storage metal" means a metal a maximum hydrogen storage amount of which in the temperature range of 0°C to 300°C is 0.01 or more, as expressed by an atomic ratio H/M between hydrogen and the metal, the atomic ratio H/M being defined in Japanese Industrial Standards (JIS) H 7003. The ratio H/M of the hydrogen storage metal may be 0.05 or more, 0.1 or more, or even 0.5 or more. A hydrogen storage amount expressed by the ratio H/M can be determined from a pressure-composition-temperature curve (PCT curve) obtained by measurement according to a volumetric method (Sieverts' method) defined in JIS H 7201. Specifically, on a PCT curve where the x-axis represents the ratio H/M and the y-axis represents the hydrogen pressure, the x-axis value at a hydrogen pressure of 5 MPa can be defined as the above hydrogen storage amount. The maximum hydrogen storage amount of the hydrogen storage metal may be, as expressed by the ratio H/M, 0.01 or more, 0.05 or more, 0.1 or more, or even 0.5 or more in a temperature range of 25°C, 50°C, 100°C, 150°C, 200°C, or 250°C to 300°C.

A work function W of the hydrogen storage metal may be more than 3.5 eV, 3.6 eV or more, 3.7 eV or more, more than 3.7 eV, 3.8 eV or more, or even 4.0 eV or more. In other words, the hydrogen storage metal may not have electron-donating properties on the catalyst. In the case where the hydrogen storage metal does not have electron-donating properties on the catalyst, excessive bonding between the catalyst and hydrogen is reduced and a more suitable condition to prevent excess and shortage of hydrogen with respect to the catalyst can be achieved.

The hydrogen storage metal may be substantially free of a Group 2 element, such as Mg. The hydrogen storage metal may be substantially free of a Group 2 element, a Group 3 element, and a lanthanoid. In the present specification, the term "substantially free" of a component means that the amount of the component is 1 atm% or less, preferably 0.5 atm% or less, more preferably 0.1 atm% or less.

The hydrogen storage metal may be substantially free of a Group 1 element.

The hydrogen storage metal may include one metal element or may include two or more metal elements. The hydrogen storage metal may be a hydrogen storage alloy. In the present specification, the term "hydrogen storage alloy" means an alloy the maximum hydrogen storage amount of which in the temperature range of 0°C to 300°C is, as expressed by the ratio H/M, 0.01 or more. The ratio H/M of the hydrogen storage alloy may be 0.05 or more, 0.1 or more, or even 0.5 or more. The maximum hydrogen storage amount of the hydrogen storage alloy may be, as expressed by the ratio H/M, 0.01 or more, 0.05 or more, 0.1 or more, or even 0.5 or more in a temperature range of 25°C, 50°C, 100°C, 150°C, 200°C, or 250°C to 300°C. The alloy includes two or more metal elements. The hydrogen storage metal, particularly a metal formed of one metal element, may be in a state of a hydride storing hydrogen.

Examples of the hydrogen storage metal formed of one metal element include titanium (Ti) and zirconium (Zr).

The support may include at least one selected from the group consisting of Ti, Zr, TiH₂, and ZrH₂.

The hydrogen storage alloy includes, for example, a metal element more likely to be bonded to hydrogen and a metal element less likely to be bonded to hydrogen. Examples of the metal element more likely to be bonded to hydrogen include a Group 2 element, a Group 3 element, a lanthanoid, an actinoid, a Group 4 element, a Group 5 element, and palladium (Pd). Examples of the Group 2 element include magnesium (Mg), calcium (Ca), strontium (Sr), and barium (Ba). Examples of the Group 3 element include scandium (Sc) and yttrium (Y). Examples of the lanthanoid include lanthanum (La), cerium (Ce), praseodymium (Pr), samarium (Sm), terbium (Tb), holmium (Ho), erbium (Er), thulium (Tm), and lutetium (Lu). Examples of the Group 4 element include titanium (Ti), zirconium (Zr), and hafnium (Hf). Examples of the Group 5 element include vanadium (V), niobium (Nb), and tantalum (Ta). Examples of the actinoid include thorium (Th). The metal element more likely to be bonded to hydrogen may be at least one selected from the group consisting of Mg, Ca, the lanthanoid, Sc, Y, Ti, Zr, Hf, V, Nb, Ta, Th, and Pd. The metal element less likely to be bonded to hydrogen is, for example, any element of Groups 6 to 15, and may be any element of Groups 6 to 14, or even any element of Groups 6 to 13. A metalloid element may be excluded from the metal element less likely to be bonded to hydrogen. The metalloid element that can be excluded is at least one selected from the group consisting of silicon (Si), germanium (Ge), arsenic (As), antimony (Sb), and bismuth (Bi). The metal element less likely to be bonded to hydrogen is, for example, at least one selected from the group consisting of chromium (Cr), manganese (Mn), iron (Fe), cobalt (Co), nickel (Ni), copper (Cu), aluminum (Al), gallium (Ga), silicon (Si), germanium (Ge), tin (Sn), lead (Pb), antimony (Sb), and bismuth (Bi), and may be at least one selected from the group consisting of Cr, Mn, Fe, Co, Ni, Cu, and Al. The hydrogen storage alloy may include two or more metal elements more likely to be bonded to hydrogen. The hydrogen storage alloy may include two or more metal elements less likely to be bonded to hydrogen.

The hydrogen storage alloy may be at least one selected from the group consisting of Ti-based, V-based, Mg-based, Ca-based, and Pd-based hydrogen storage alloys. The Ti-based hydrogen storage alloy may include Ti and at least one selected from the group consisting of Zr, V, Cr, Mn, Fe, Co, Ni, and Cu. The V-based hydrogen storage alloy may include V and at least one selected from the group consisting of Ti, Zr, Cr, Mn, Fe, Co, Ni, and Cu. The Mg-based hydrogen storage alloy may include Mg and at least one selected from the group consisting of Ni, Co, and Al. The Ca-based hydrogen storage alloy may include Ca and at least one selected from the group consisting of Ni, Co, and Al. The Pd-based hydrogen storage alloy may include Pd and at least one selected from the group consisting of Mg, Ca, and V.

The hydrogen storage alloy may be, for example, at least one selected from the group consisting of AB-type, AB₂-type, AB₅-type, A₂B-type, and A₅B₃-type hydrogen storage alloys. The AB-type and AB₂-type hydrogen storage alloys may include at least one selected from the group consisting of Ti, Mn, Zr, and Ni. The AB₅-type hydrogen storage alloy may include at least one selected from the group consisting of Mg, Ca, Sc, Y, a lanthanoid, Nb, Zr, Ni, Co, and Al. The A₂B-type hydrogen storage alloy may include at least one selected from the group consisting of Mg and Ca and at least one selected from the group consisting of Ni, Co, and Al. The A₅B₃-type hydrogen storage alloy may include at least one selected from the group consisting of Sc, Zr, Hf, V, Nb, Ta, a lanthanoid, and Th and at least one selected from the group consisting of Al, Ga, Si, Ge, Sn, Pb, Sb, and Bi. Examples of the A₅B₃-type hydrogen storage alloy include Zr₅Pb₃, Zr₅Sn₃, and Ti₅Ge₃.

The hydrogen storage alloy may have at least one crystal structure selected from the group consisting of a body-centered cubic lattice structure (BCC structure) and a hexagonal close-packed structure. The hexagonal close-packed structure may be a Laves phase. The Laves phase may be at least one selected from the group consisting of C14, C15, and C36. The hydrogen storage alloy having a hexagonal close-packed structure such as a Laves phase as a crystal structure is, for example, an AB₂-type hydrogen storage alloy.

The hydrogen storage alloy may include at least one selected from the group consisting of a solid solution and an intermetallic compound, or may be a solid solution.

More specific examples of the hydrogen storage alloy include a Ti-Mn-based alloy, a Ti-Fe-based alloy, and an A₅B₃-type intermetallic compound. Examples of the A₅B₃-type intermetallic compound include Zr₅Pb₃, Zr₅Sn₃, and Ti₅Ge₃.

The Ti-Mn-based alloy may be binary, ternary, or multinary such as quaternary or greater. The Ti-Mn alloy may be a Ti-Mn-V ternary alloy. In the present specification, the expression "A-B-based alloy" means that the total amount of a metal A and a metal B is 50 atm% or more. For example, the Ti-Mn-based alloy means an alloy in which the total amount of Ti and Mn is 50 atm% or more. The total amount of the metal A and the metal B in the A-B-based alloy may be 60 atm% or more, 70 atm% or more, or even 80 atm% or more. The alloys such as the Ti-Mn-based alloy may be solid solutions. The total amount of Ti, Mn, and V in the Ti-Mn-V ternary alloy may be, for example, 55 atm% or more, 65 atm% or more, 75 atm% or more, or even 85 atm% or more.

The total amount of a non-metallic element, typically at least one element selected from the group consisting of hydrogen, nitrogen, oxygen, sulfur, and a halogen, may be less than 10 atm% in the hydrogen storage metal, or may be 5 atm% or less, 3 atm% or less, 1 atm% or less, or even 0.5 atm% or less in the hydrogen storage metal. Examples of the halogen include fluorine, chlorine, and bromine. The amount of hydrogen is based on the number of hydrogen atoms in the hydrogen storage metal not storing hydrogen.

The hydrogen storage metal and the catalyst may be different from each other. The metal element included in the hydrogen storage metal and the metal element that can be included in the catalyst may be different from each other.

The support is generally in the form of particles. An average particle diameter of the support is, for example, 0.01 to 500 µm, and may be 0.1 to 100 µm. However, the form and the average particle diameter of the support are not limited to the above examples as long as the support on which the catalyst is supported functions as the ammonia synthesis composite catalyst. The term "average particle diameter" in the present specification means a particle diameter (D50) at 50% in a cumulative particle size distribution (volume basis) obtained by particle size distribution measurement by laser diffractometry.

The affinity (binding affinity) of the hydrogen storage material (particularly, the hydrogen storage metal) included in the support for hydrogen may be higher than the affinity of the catalyst (particularly, a transition metal that can be included in the catalyst) for hydrogen. This embodiment is particularly suitable for reducing the activation energy of a synthesis reaction. The affinity for hydrogen can be estimated by quantum chemical calculation. For example, the affinity of the Ti-Mn-based alloy such as the Ti-Mn-V ternary alloy, that of Ti, and that of Zr for hydrogen are each higher than the affinity of Ru for hydrogen. In one example of quantum chemical calculation, stabilization energy (e.g., hydrogen adsorption energy for the catalyst, and hydrogen storage energy for the support) corresponding to the affinity for hydrogen is determined by density functional theory (DFT) calculation using Vienna Ab initio Simulation Package (VASP) being a first-principles calculation program. For example, Generalized Gradient Approximation-Perdew-Burke-Ernzerhof (GGA-PBE) and the Projector Augmented Wave method (PAW method) can be used for a functional and a basis function, respectively. A basis function recommended by the Materials Project can also be used.

The hydrogen storage material may be a material not exhibiting catalytic activity for synthesis of ammonia.

### (Catalyst)

The catalyst supported by the support exhibits catalytic activity for synthesis of ammonia. Nitrogen (N₂) adsorption energy of the catalyst may be -3.0 to 1 eV, -2.5 to 0.5 eV, or even -2.0 to 0.25 eV. The catalyst exhibiting nitrogen adsorption energy in the above range exhibits high catalytic activity.

The catalyst includes, for example, a transition metal. The transition metal may be a main component of the catalyst. The catalyst may be formed of the transition metal.

The transition metal is, for example, at least one selected from the group consisting of Ru, Co, Ni, Fe, Mn, Cr, molybdenum (Mo), tungsten (W), V, Zr, Nb, and Ti. The transition metal may be at least one selected from the group consisting of Ru, Co, Ni, Fe, Mn, Cr, Mo, W, V, and Nb, may be at least one selected from the group consisting of Ru, Co, Ni, and Fe, or may be Ru.

The catalyst generally in the form of particles. An average particle diameter of the catalyst is, for example, 1 to 500 nm, and may be 10 to 100 nm. However, the form and the average particle diameter of the catalyst are not limited to the above examples as long as the catalyst can be supported on the support.

### (Ammonia synthesis composite catalyst)

Although varying depending on the combination of the support and the catalyst, a supported amount of the catalyst in the ammonia synthesis composite catalyst is, for example, 0.1 to 96 mass%, and may be 1 to 70 mass%, 1 to 50 mass%, 1 to 30 mass%, 1 to 20 mass%, 1 to 10 mass%, or even 2 to 7 mass%.

The ammonia synthesis composite catalyst may include an additional substance other than the above support and the above catalyst. Examples of the additional substance include a promotor and an additive that improve catalytic activity. The promotor and the additive may have electron-donating properties. The work function of the electron-donating substance may be 3.7 eV or less, 3.5 eV or less, 3.3 eV or less, or even 3.0 eV or less. Examples of the promotor include a Group 2 element, a Group 3 element, and a lanthanoid, and examples of the additive include Ba, potassium (K), cesium (Cs), and sodium (Na).

### [Method for manufacturing ammonia synthesis composite catalyst]

The ammonia synthesis composite catalyst of the present embodiment can be manufactured, for example, by the following method. However, the method for manufacturing the catalyst is not limited to the following example.

### (Production of support)

The support can be produced, for example, from a material (such as the hydrogen storage metal) having a hydrogen storage capacity. The support being the hydrogen storage alloy can be produced, for example, by a general method in which two or more metal elements are mixed and molten to form a hydrogen storage alloy. A thermal treatment may be performed after melting and solidification for the purpose of, for example, adjustment of the crystal structure of the hydrogen storage alloy. A commercially-available hydrogen storage material, a commercially-available hydrogen storage metal, or a commercially-available hydrogen storage alloy can be used as the support. The average particle diameter of the support can be adjusted by a known crushing method. However, the support production method is not limited to the above example.

### (Supporting of catalyst)

Supporting of the catalyst can be accomplished, for example, by immersing the support into a solution of a compound of the transition metal and then removing the solvent in the solution (impregnation method). When the transition metal is Ru, examples of the compound include C₁₂O₁₂Ru₃ and ruthenium(III) acetylacetonate. However, the compound is not limited to the above examples. A known compound that can be used in the impregnation method is usable depending on the type of the transition metal. The solvent can be removed, for example, by heating. Pressure reduction may be performed in conjunction with the heating. However, the method for supporting the catalyst is not limited to the above example. A known supporting method (e.g., a method in which a solid catalyst is supported by heating under reduced pressure) can be employed in accordance with the type of the catalyst. The ammonia synthesis composite catalyst can be obtained by supporting the catalyst on the support.

### [Ammonia manufacturing method]

The ammonia manufacturing method of the present embodiment includes bringing a gas including hydrogen and nitrogen into contact with an ammonia synthesis catalyst to synthesize ammonia. The ammonia synthesis catalyst is the above composite catalyst of the present embodiment.

The gas (raw material gas) serving as a raw material may include hydrogen and nitrogen in a stoichiometric ratio. The raw material gas may include a gas other than hydrogen or nitrogen may be included, if necessary.

The raw material gas and the ammonia synthesis composite catalyst can be brought into contact in a known ammonia synthesis apparatus and known ammonia synthesis facilities.

An ammonia synthesis temperature is, for example, 50 to 500°C, and may be 250 to 500°C or even 250 to 400°C. An ammonia synthesis pressure is, for example, 0.1 to 10 MPa, and may be 1 to 5 MPa.

### EXAMPLES

Hereinafter, the present invention will be described more specifically by way of examples. The present invention is not limited to specific embodiments shown below.

### (Example 1)

An amount of 0.126 g of C₁₂O₁₂Ru₃ (manufactured by Tokyo Chemical Industry Co., Ltd.) was added to 500 mL of pentane (manufactured by Nacalai Tesque) and molten by heating to obtain a pentane solution of C₁₂O₁₂Ru₃. Next, 5.94 g of a commercially-available Ti-Mn-V ternary alloy (Ti₅₁Mn₂₉V₂₀, manufactured by Sigma-Aldrich Japan K.K.) was crushed in a mortar into powder, which was added to the above solution. The pentane was completely evaporated by heating for about 4 hours to obtain a catalyst (supported amount: 1 mass%) in which Ru particles were supported on the Ti-Mn-V ternary alloy serving as a support. The Ti-Mn-V ternary alloy used is a solid solution. In the temperature range of 0°C to 300°C, the maximum hydrogen storage amount of the Ti-Mn-V ternary alloy used is, as expressed by the above ratio H/M, 0.1 or more. The work functions of Ti, Mn, and V are respectively 4.3 eV, 4.1 eV, and 4.3 eV.

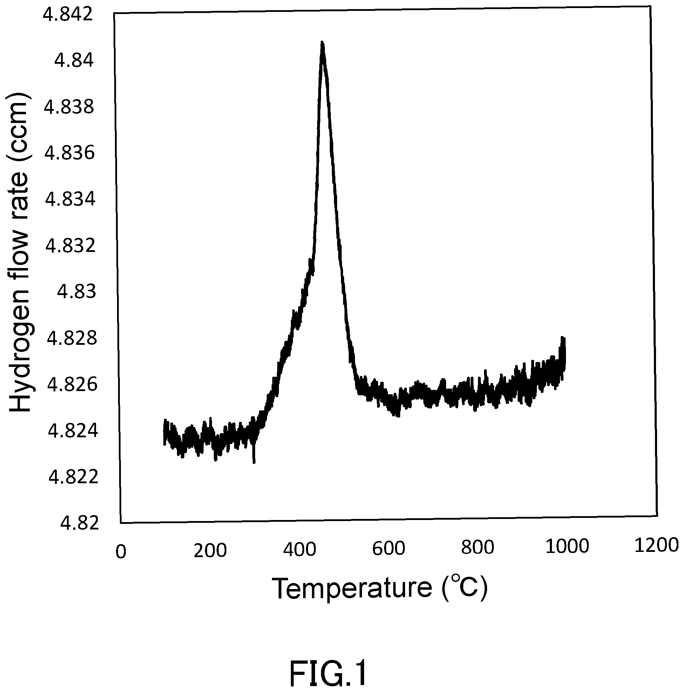

The hydrogen storage capacity of the obtained catalyst was evaluated by temperature programed desorption (TPD) in the following manner. An amount of 0.104 g of the catalyst was placed in a container capable of continuously supplying a mixed gas (hydrogen concentration: 9.73 volume%) including hydrogen and argon. The container was connected to a TPD apparatus (AutoChem II 2920 manufactured by Shimadzu Corporation), and 50 ccm of a mixed gas as described above was kept flowing into the container over 60 minutes (pretreatment). A flow rate of the hydrogen gas included in the mixed gas was 4.865 ccm. After the pretreatment, the container was heated and cooled in the following cycle while the mixed gas was flowing: (1) heating from 100°C to 300°C at a temperature increase rate of 10°C/min; (2) keeping 300°C for 1 hour; (3) heating from 300°C to 1000°C at a temperature increase rate of 10°C/min; (4) keeping 1000°C for 0.5 hours; and (5) cooling to 100°C at a temperature decrease rate of 20°C/min. A flow rate of hydrogen included in a gas discharged from the container was continuously measured during the cycle. The cycle was repeated three times. FIG. 1 shows a measurement result of the flow rate measured while the temperature was varying from 100°C to 1000°C by heating. As shown in FIG. 1, the flow rate of hydrogen discharged from the container is greater than the flow rate of hydrogen flowing into the container. This confirms that the catalyst stores hydrogen during a temperature decrease and releases hydrogen during a temperature increase, in other words, that the catalyst has the hydrogen storage capacity. Since Ru does not have a hydrogen storage capacity, the hydrogen storage capacity confirmed is thought to be attributed to the Ti-Mn-V ternary alloy being a support. Additionally, an increase in the flow rate of hydrogen discharged from the container was observed in the temperature range of 350 to 500°C in which an ammonia synthesis reaction proceeds. This is thought to be due to repeated storage and release of hydrogen in and from the catalyst in this temperature range.

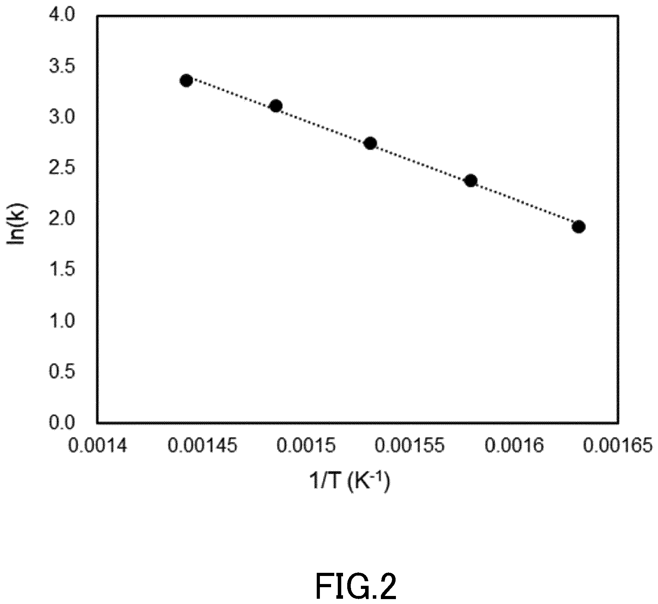

Next, an ammonia synthesis reaction was allowed to proceed using the obtained catalyst, and the activation energy of the ammonia synthesis reaction by the catalyst was calculated by means of an Arrhenius plot. The ammonia synthesis reaction and making of the Arrhenius plot were performed in the following manner. An amount of 1.00 g of the catalyst was placed in a reaction tube, and was heated to 340 to 420°C. After the heating, a mixed gas (hydrogen flow rate: 90 ccm; nitrogen flow rate: 30 ccm; the mixing ratio of hydrogen and nitrogen was a stoichiometric ratio) including hydrogen and nitrogen was allowed to flow into a container to allow an ammonia synthesis reaction to proceed. The amount of ammonia generated at each reaction temperature T was identified, and an Arrhenius plot was made on the basis of the identified amounts and reaction temperatures. FIG. 2 shows the Arrhenius plot made. The x-axis of the plot shown in FIG. 2 represents a reciprocal of the reaction temperature T expressed by an absolute temperature, and the y-axis represents a natural logarithm of a reaction constant k (unit: µmol/g/hr). The amount of the generated ammonia was identified by bubbling a gas discharged from the container through an aqueous sulfuric acid solution (concentration: 0.005 mol/L) and evaluating the aqueous sulfuric acid solution by ion chromatography after the bubbling. The activation energy calculated from the Arrhenius plot was 64 kJ/mol, which means that about half the activation energy (137 kJ/mol) obtained using only Ru as a catalyst was able to be attained.

### (Example 2)

Catalysts (supported amount: 1 mass%, 3 mass%, 5 mass%, and 10 mass%) in which Ru particles were supported on a Ti-Mn-V ternary alloy serving as a support were obtained in the same manner as in Example 1, except that Ti₂₉Mn₅₁V₁₄(Fe,Cr,Zr)₆ (manufactured by Sigma-Aldrich Co., LLC.) was used as the Ti-Mn-V ternary alloy and a pentane solution of ruthenium(III) acetylacetonate was used instead of the pentane solution of C₁₂O₁₂Ru₃. The different supported amounts of the Ru particles were achieved by changing the amount of the pentane solution. The Ti-Mn-V ternary alloy used is a solid solution. In the temperature range of 0°C to 300°C, the maximum hydrogen storage amount of the Ti-Mn-V ternary alloy used is, as expressed by the ratio H/M, 0.1 or more. The work functions of Fe, Cr, and Zr are respectively 4.5 eV, 4.5 eV, and 4.1 eV.

The hydrogen storage capacity of each of the obtained catalysts was evaluated by TPD in the same manner as in Example 1. An increase in the flow rate of hydrogen discharged from the container was observed in the temperature range of 350 to 500°C in which an ammonia synthesis reaction proceeds.

Next, the activation energy of an ammonia synthesis reaction was evaluated for each of the obtained catalysts in the same manner as in Example 1. The activation energies were 44 kJ/mol (supported amount: 1 mass%), 56 kJ/mol (supported amount: 3 mass%), 68 kJ/mol (supported amount: 5 mass%), and 67 kJ/mol (supported amount: 10 mass%).

### (Example 3)

A catalyst (supported amount of Ru: 10 mass%) as produced in Example 2 was dispersed in N,N-dimethylformamide to obtain a dispersion. Next, potassium nitrate was added to the dispersion, and the N,N-dimethylformamide was completely vaporized by heating under reduced pressure to obtain a catalyst further including K as a promotor. The amount of K and the amount of Ru were in a ratio of 1:1 (molar ratio). Next, the activation energy of an ammonia synthesis reaction was evaluated for the obtained catalyst in the same manner as in Example 1, and was 52 kJ/mol.

### (Example 4)

A catalyst (supported amount: 1 mass%) in which Ru particles were supported on ZrH₂ serving as a support was obtained in the same manner as in Example 2, except that ZrH₂ was used instead of the Ti-Mn-V ternary alloy. The maximum hydrogen storage amount of the ZrH₂ in the temperature range of 0°C to 300°C is, as expressed by the ratio H/M, 0.1 or more.

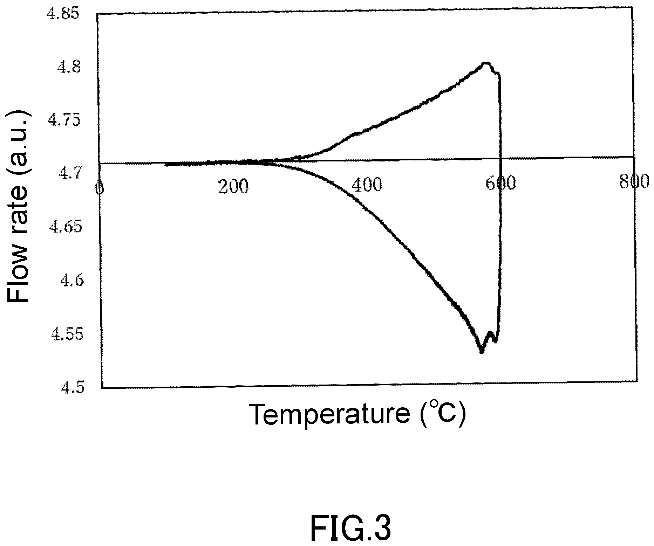

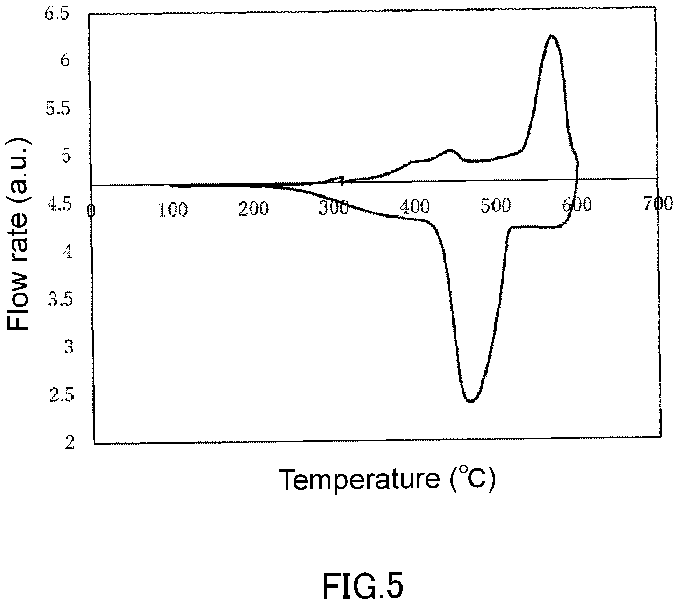

The hydrogen storage capacity of the obtained catalyst was evaluated by TPD in the same manner as in Example 1. It should be noted that the heating and cooling conditions were as follows in the cycle: (1) heating from 100°C to 300°C at a temperature increase rate of 10°C/min; (2) keeping 300°C for 1 hour; (3) heating from 300°C to 600°C at a temperature increase rate of 10°C/min; (4) keeping 600°C for 1 hour; and (5) cooling to 100°C at a temperature decrease rate of 20°C/min. FIG. 3 shows a TPD evaluation result of this cycle as the flow rate of hydrogen included in the gas discharged from the container. As shown in FIG. 3, it has been confirmed that the catalyst has the capacity to store and release hydrogen in the temperature range of 350 to 500°C (e.g. at 400°C) in which an ammonia synthesis reaction proceeds. It should be noted that vertical axis values in FIG. 3 and FIG. 5 below are relative values (unit: a.u.).

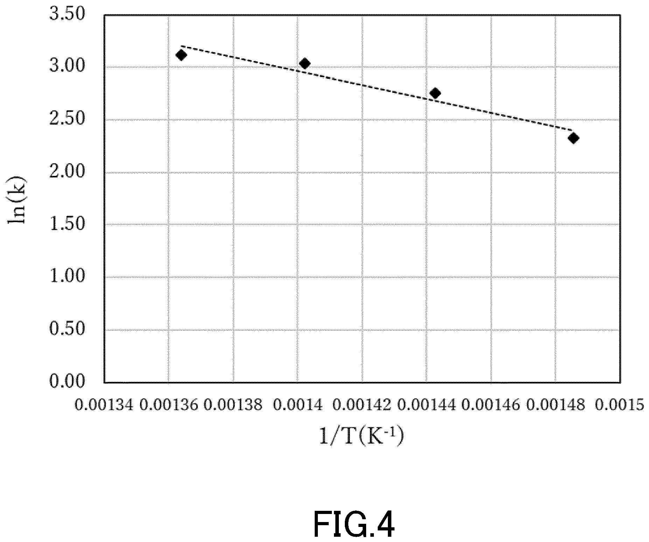

Next, the activation energy of an ammonia synthesis reaction was evaluated for the obtained catalyst in the same manner as in Example 1 (however, the heating temperature was 400 to 460°C), and was 55 kJ/mol. FIG. 4 shows an Arrhenius plot made for the evaluation.

### (Example 5)

A catalyst (supported amount: 1 mass%) in which Ru particles were supported on TiH₂ serving as a support was obtained in the same manner as in Example 2, except that TiH₂ was used instead of ZrH₂. The maximum hydrogen storage amount of the TiH₂ in the temperature range of 0°C to 300°C is, as expressed by the ratio H/M, 0.1 or more.

The hydrogen storage capacity of the obtained catalyst was evaluated by TPD in the same manner as in Example 1. It should be noted that the heating conditions were the same as those in Example 4. FIG. 5 shows a TPD evaluation result of the above cycle as the flow rate of hydrogen included in the gas discharged from the container. As shown in FIG. 5, it has been confirmed that the catalyst has the capacity to store and release hydrogen in the temperature range of 350 to 500°C (e.g. at 400°C) in which an ammonia synthesis reaction proceeds.

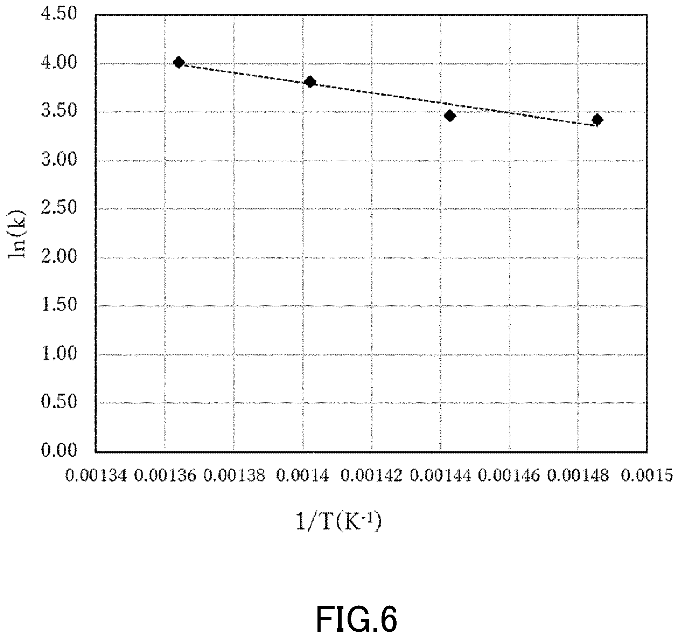

Next, the activation energy of an ammonia synthesis reaction was evaluated for the obtained catalyst in the same manner as in Example 4, and was 43 kJ/mol. FIG. 6 shows an Arrhenius plot made for the evaluation.

### (Comparative Example 1)

A catalyst (supported amount: 1 mass%) in which Ru particles were supported on MgO serving as a support was obtained in the same manner as in Example 2, except that MgO (manufactured by Kojundo Chemical Laboratory Co., Ltd.) was used instead of the Ti-Mn-V ternary alloy. The activation energy of an ammonia synthesis reaction was evaluated for the obtained catalyst in the same manner as in Example 1, and was 87 kJ/mol. Incidentally, it is thought that MgO does not have a hydrogen storage capacity.

### (Comparative Example 2)

A catalyst (supported amount: 10 mass%) in which Ru particles were supported on carbon serving as a support was obtained in the same manner as in Example 2, except that carbon (manufactured by Kojundo Chemical Laboratory Co., Ltd.) was used instead of the Ti-Mn-V ternary alloy. The activation energy of an ammonia synthesis reaction was evaluated for the obtained catalyst in the same manner as in Example 1, and was 104 kJ/mol. Incidentally, it is thought that carbon does not have a hydrogen storage capacity.

### (Reference Example)

A powder of a Ti-Mn-V ternary alloy as used in Example 2 was used as a catalyst in an attempt for an ammonia synthesis reaction in the same manner as in Example 2, but a synthesis reaction did not proceed. Moreover, Ni, Fe, and TiH₂ powders were each used as a catalyst in an attempt for an ammonia synthesis reaction in the same manner as in Example 2, but synthesis reactions did not proceed.

### INDUSTRIAL APPLICABILITY

The ammonia synthesis composite catalyst of the present invention can be used for synthesis of ammonia.

## Claims

1. An ammonia synthesis composite catalyst comprising:
a catalyst exhibiting catalytic activity for synthesis of ammonia; and
a support supporting the catalyst, wherein
the support includes a hydrogen storage material.

2. The ammonia synthesis composite catalyst according to claim 1, wherein the hydrogen storage material is a hydrogen storage metal.

3. The ammonia synthesis composite catalyst according to claim 2, wherein a work function of the hydrogen storage metal is more than 3.5 eV.

4. The ammonia synthesis composite catalyst according to claim 2 or 3, wherein the hydrogen storage metal is substantially free of a Group 2 element, a Group 3 element, and a lanthanoid.

5. The ammonia synthesis composite catalyst according to any one of claims 2 to 4, wherein the hydrogen storage metal is a hydrogen storage alloy.

6. The ammonia synthesis composite catalyst according to claim 5, wherein the hydrogen storage alloy is a solid solution.

7. The ammonia synthesis composite catalyst according to claim 5, wherein the hydrogen storage alloy is a Ti-Mn-based alloy.

8. The ammonia synthesis composite catalyst according to claim 7, wherein the Ti-Mn-based alloy is a Ti-Mn-V ternary alloy.

9. The ammonia synthesis composite catalyst according to any one of claims 1 to 8, wherein the catalyst includes a transition metal.

10. The ammonia synthesis composite catalyst according to claim 9, wherein the transition metal is at least one selected from the group consisting of Ru, Co, Ni, Fe, Mn, V, and Ti.

11. The ammonia synthesis composite catalyst according to claim 9, wherein the transition metal is Ru.

12. An ammonia manufacturing method comprising: bringing a gas including hydrogen and nitrogen into contact with an ammonia synthesis catalyst to synthesize ammonia, wherein
the ammonia synthesis catalyst is the ammonia synthesis composite catalyst according to any one of claims 1 to 11.
